# NEUE EUROPÄISCHE PATENTSCHRIFT

(11) **EP 1 064 834 B2**
(45) Veröffentlichungstag und Bekanntmachung des Hinweises auf die Entscheidung über den Einspruch: **26.12.2007**
(45) Hinweis auf die Patenterteilung: 03.03.2004
(21) Anmeldenummer: 00112336.3
(22) Anmeldetag: 09.06.2000
(51) Int. Cl.: A01D 41/14, A01D 75/18

(54) **Landwirtschaftliche Erntemaschine**
Harvesting machine
Machine de récolte

(30) Priorität: 30.06.1999 DE 19929987
(43) Veröffentlichungstag der Anmeldung: 03.01.2001
(73) Patentinhaber: CLAAS Selbstfahrende Erntemaschinen GmbH, 33428 Harsewinkel (DE)
(72) Erfinder: Nowak, Martin, 48231 Warendorf (DE)

(56) Entgegenhaltungen:
- EP-A- 1 046 334
- DE-A- 1 816 910
- DE-A- 3 014 914
- DE-A- 4 326 305
- FR-A- 2 488 775
- US-A- 2 777 269
- US-A- 4 088 210
- US-A- 4 343 137
- US-A- 4 430 847
- US-A- 4 585 115

## Beschreibung

Die Erfindung betrifft eine landwirtschaftliche Erntemaschine, selbstfahrender Mähdrescher, mit im vorderen Bereich am Mähdrescherrahmen lösbar befestigten, mit einer Antriebswelle versehenen Schrägförderer, an dem frontseitig eine Aufnahmebaugruppe angehängt ist, wobei sowohl der Antrieb des Schrägförderers als auch der Antrieb für die Aufnahmebaugruppe von einer über eine Kupplung lösbar mit dem Antriebsmotor des Mähdreschers verbundenen Riemenscheibe abgeleitet ist.

Während des Einsatzes eines solchen bekannten Mähdreschers auf dem Feld beobachtet der Fahrer ständig das vor der Schneidwerksgruppe stehende Halmgut. Sobald Fremdkörper auftauchen, löst der Fahrer über einen manuell zu betätigenden Hebel die Kupplung für den Antrieb des gesamten Mähdreschervorsatzes. Hierdurch soll verhindert werden, daß die beobachtenten Fremdkörper in die Maschine eingezogen werden und Schäden verursachen. Diese Maßnahme ist allerdings äußerst unzufriedenstellend, da nach dem Ausschalten des Antriebsstranges für den gesamten Mähdreschervorsatz dieser lediglich durch die Eigenreibung des Systems abgebremst wird. Durch das Nachlaufen der Einzugsorgane mitsamt dem dafür notwendigen Antriebsstrang am Mähdrescher kommt es zur ungewollten Förderung von Fremdkörpern in die Maschine. Weiter war es aus der nicht vorveröffentlichten EP 1 046 334 bekannt, dem Schrägförderer eines Mähdreschers ein Bremsaggregat zuzuordnen, wobei das Bremsaggregat von einem Reversiermotor gebildet wird, dessen energieübertragenden Einrichtungen dem Schrägförderer in einem außenseitigen Bereich zugeordnet sind. Eine derartige Ausführung hat insbesondere den Nachteil, dass wegen der aufgelösten Bauweise ein relativ großer Bauraum benötigt wird.

Der vorliegenden Erfindung liegt daher das Problem zugrunde, eine landwirtschaftliche Maschine der eingangs näher bezeichneten Art so auszubilden, daß nach dem Abschalten des Antriebsstranges für den gesamten Mähdreschervorsatz durch Lösen der Kupplung vom Mähdrescherfahrer aus kein Gut mehr eingezogen wird. Diese Aufgabe wird erfindungsgemäß durch die kennzeichnenden Merkmale des Anspruchs 1 gelöst. Durch Betätigung dieser Bremse beim Auftreten von Fremdkörpern wird demzufolge die Antriebswelle für den Schrägförderer und damit auch der Antrieb für die vorgelagerte Aufnahmebaugruppe unterbrochen, da letztere mit dem Antrieb des Schrägförderers gekoppelt ist.

Ein weiteres Merkmal der Erfindung ist darin zu sehen, daß bei Betätigung der Kupplung für die Riemenscheibe automatisch etwa zeitgleich auch die Bremse für den Schrägförderer betätigt wird. Dies kann manuell vom Mähdrescherfahrer aus vorgenommen werden. Nach einem weiteren Merkmal der Erfindung ist aber auch vorgesehen, daß die Bremse für den Schrägförderer in Abhängigkeit eines im Eingangsbereich des Schrägförderers angeordneten Fremdkörperdetektors betätigbar ist. Es ist selbstverständlich, daß dann auch gleichzeitig die Kupplung für den Antriebsstrang gelöst wird.

Die Bremse selbst ist auf einfache Art und Weise als Scheibenbremse ausgebildet. Es ist jedoch problemlos möglich, alternativ sonstige handelsübliche Bremsen für diesen Zweck einzusezten.

Um zu verhindern, daß durch Betätigung der Bremse sowohl der Schrägförderer als auch die Schneidswerksbaugruppe schlagartig abgebremst werden, ist der Antrieb der Aufnahmebaugruppe nach einem wesentlichen Merkmal der Erfindung über eine Rutschkupplung mit der Antriebswelle des Schrägförderers verbunden. Auf diese Weise werden dann bei Betätigung der Bremse die relativ geringen Massen des Schrägförderers schlagartig abgebremst und die nachlaufenden Massen der Aufnahmebaugruppe von der Rutschkupplung abgefangen. Die Nachlaufzeit der Massen der Aufnahmebaugruppe kann je nach Art oder Einstellung der Rutschkupplung auf ein Minimum reduziert werden. Die Aufnahmebaugruppe wird demnach schonend abgebremst.

Auf konstruktive Art und Weise ist auf die Antriebswelle des Schrägförderers eine Riemenscheibe aufgesetzt, von der der Antrieb für die Aufnahmebaugruppe abgeleitet ist, wobei die Riemenscheibe über die Rutschkupplung mit der Schrägfördererantriebswelle in Verbindung steht. In einfacher Ausgestaltung ist dabei die Antriebswelle für den Schrägförderer einendig in einer mit dem Gehäuse des Schrägförderers festverbundenen Buchse drehbar gelagert, wobei letztere einen Bremssattel trägt. Die dem Bremssattel zugehörige Bremsscheibe ist fest mit der Antriebswelle für den Schrägförderer verbunden.

Im folgenden soll die Erfindung anhand eines Ausführungsbeispieles und zweier dieses schematisch darstellender Figuren näher erläutert werden.

Dabei zeigt:
- Figur 1: den vorderen Teil eines selbstfahrenden Mähdreschers in der Seitenansicht und

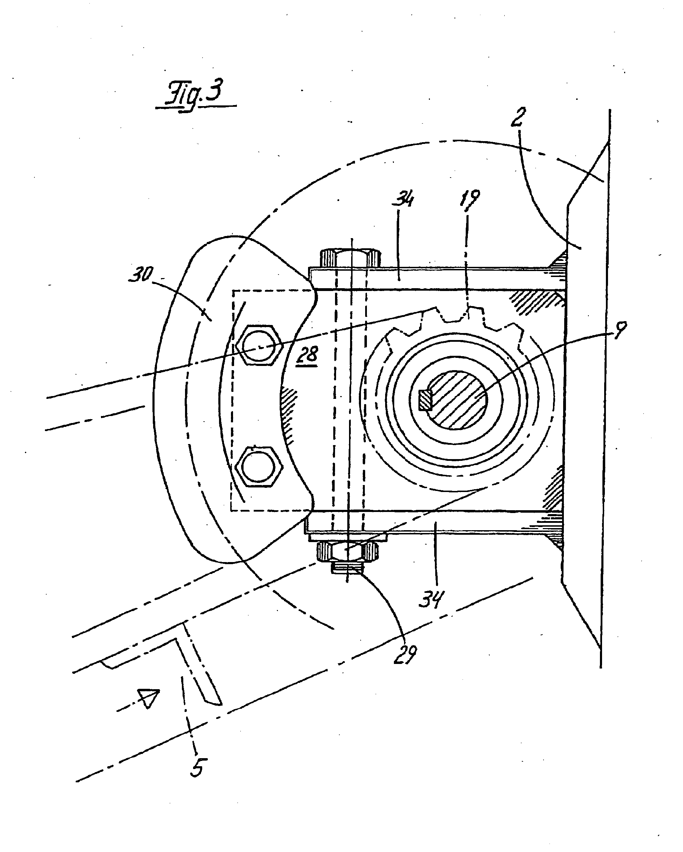

- Figur 2: eine Darstellung gemäß der Schnittlinie II - II in Figur 3
- Figur 3: Eine Seitenansicht der Fig. 2 nach der Linie III - III in Fig. 2

Mit 1 ist der vordere Teil eines selbstfahrenden Mähdreschers bezeichnet, dessen vorderer Rahmen 2 den als Ganzes mit 3 bezeichneten Mähdreschervorsatz trägt. Der Mähdreschervorsatz 3 besteht in bekannter Weise aus einer Aufnahmebaugruppe 4 und aus dem Schrägförderer 5. Auf die Welle 6 für den Antriebsstrang der Aufnahmebaugruppe ist eine Riemenscheibe 7 aufgesetzt. Eine weitere Riemenscheibe 8 ist auf die Antriebswelle 9 des Schrägförderers 5 aufgesetzt. Beide Riemenscheiben 7 und 8 sind von einem gemeinsamen Riemen 10 umschlungen, der über eine Scheibe 11 angetrieben wird. Diese Scheibe 11 steht über weitere Endlosriemen 12 und 13 und entsprechende Scheiben 14 und Umlenkrollen 15 mit der Antriebsscheibe 16 des Motors 17 in Verbindung. Der sich zwischen dem Motor 17 und dem Mähdreschervorsatz erstreckende Antriebsstrang kann in bekannter Weise mittels einer Kupplung 35 vom Motor 17 abgekuppelt werden. Da ein solches Antriebsschema in der Praxis bekannt ist, soll dieses nicht näher dargestellt werden; es sei darauf hingewiesen, daß der Antrieb ähnlich ausgelegt ist, wie der Antrieb gemäß der deutschen Patentschrift 43 26 305 C2.

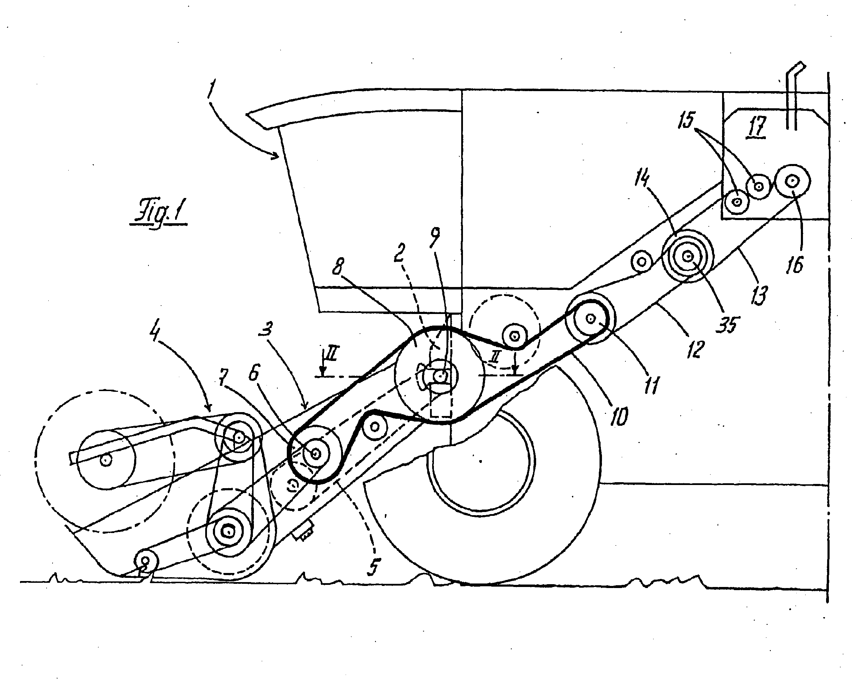

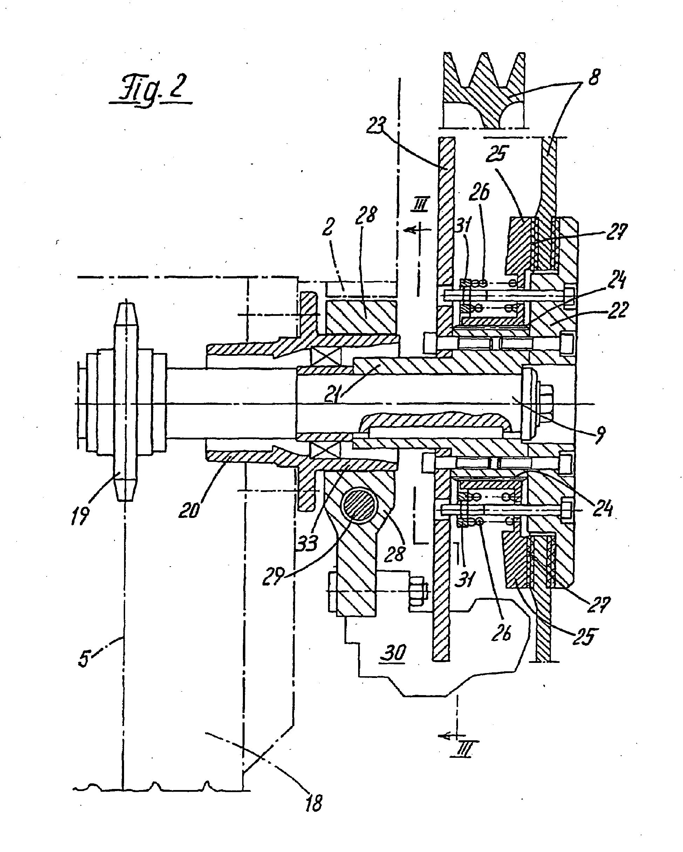

In Figur 2 ist die Antriebswelle 9 für den Schrägförderer 5 dargestellt, die in den Schrägfördererkanal 18 hineinragt und mit mehreren Kettenrädern 19 besetzt ist, von denen nur eines gezeigt ist. An einer Seite des Schrägfördererkanals 18 ist die Antriebswelle 9 über ein Lager in einer Buchse 20 frei drehbar gelagert. Auf das nach außen vorragende Ende der Antriebswelle 9 ist eine Nabe 21 verkeilt, die einen Abschlußdeckel 22 aufweist. Weiterhin ist mit der Nabe 21 eine Bremsscheibe 23 verschraubt, die einen axialen Abstand zum Deckel 22 aufweist. Im Bereich zwischen der Bremsscheibe 23 und dem Deckel 22 weist die Nabe 21 eine äußere Verzahnung 24 auf Mit der Verzahnung 24 korrespondiert eine ebenfalls verzahnte Topfscheibe 25, die mittels einer Druckfeder 26 unter Zwischenschaltung eines Bremsbelages 27 und der Riemenscheibe 8 gegen den Deckel 22 gepreßt wird zum Antrieb der Welle 9 für den Schrägförderer 5. Wie aus Figur 1 hervorgeht, werden die Riemenscheibe 8 für den Antrieb des Schrägförderers und die Riemenscheibe 7 für den Antrieb der Aufnahmebaugruppe 4 von einem gemeinsamen Riemen 10 umschlungen.
Aus der Figur 2 geht weiter hervor, daß der Schrägfördererkanal 18 über seine obere Antriebswelle 9 an den vorderen Rahmen 2 der Erntemaschine 1 schwenbar angekuppelt ist. Hierzu ist die Welle 9 mittels Buchsen 20 mit seinen Enden in den Seitenwänden des Förderkanals 18 gelagert.
Auf den äußeren Ringen 33 der Buchsen 20 sind Formstücke 28 gleitlagernd aufgesetzt. Mittels dieser Formstücke 28 wird der Schrägfördererkanal 18 mit dem Maschinenrahmen 2 derart verbunden, daß die Formstücke 28 in gabelförmige, mit dem Rahmen 2 verschweißte Konsolen 34 eingestellt und über Schraubenbolzen 29 lagegesichert werden. An dem, dem Rahmen 2 abgewandten Ende des Formstücks 18 ist auf der Antriebsseite des Förderkanals 18 der Bremssattel 30 einer Scheibenbremseinrichtung 23, 30 befestigt.

Wird nun bei Auftreten von Fremdkörpern die Kupplung 35 vom Mähdrescherfahrer aus gelöst, wird damit etwa zeitgleich auch der Bremssattel 30 betätigt, der dann die Scheibe 23 schlagartig abbremst. Da diese Scheibe 23 über die Nabe 21 fest mit der Antriebswelle 9 des Schrägförderers 5 verbunden ist, wird auch dieser unmittelbar abgebremst. Mit nur geringer Verzögerung werden auch die nachlaufenden Massen der Aufnahmebaugruppe 4 über die Rutschkupplung (25 bis 27) abgebremst, weil die Topfscheibe 25 der Rutschkupplung die Riemenscheibe 8 unter Zwischenschaltung von Bremsbelägen gegen den abgebremsten Deckel 22 preßt. Die Nachlaufzeit der Aufnahmebaugruppe 4 kann durch Einstellen der Rutschkupplung verändert werden. Zu diesem Zweck können die Druckfedern 26 durch Verstellen der Teller 31 mehr oder weniger stark vorgespannt werden.

Die Scheibenbremse 23, 30 kann anstatt vom Fahrer auch von einem in Figur 1 schematisch angedeuteten Fremdkörperdetektor 32 geschaltet werden.

### Bezugszeichenliste

- 1 -: Teil eines Mähdreschers
- 2 -: Rahmen
- 3 -: Mähdreschervorsatz
- 4 -: Aufnahmebaugruppe
- 5 -: Schrägförderer
- 6 -: Welle
- 7 -: Riemescheibe
- 8 -: Riemenscheibe
- 9 -: Antriebswelle
- 10 -: Riemen
- 11 -: Scheibe
- 12 -: Endlosriemen
- 13 -: Endlosriemen
- 14 -: Scheiben
- 15 -: Umlenkrollen
- 16 -: Scheibe
- 17 -: Motor
- 18 -: Schrägfördererkanal
- 19 -: Kettenräder
- 20 -: Buchse
- 21 -: Nabe
- 22 -: Abschlußdeckel
- 23 -: Bremsscheibe
- 24 -: Verzahnung
- 25 -: Topfscheibe
- 26 -: Druckfeder
- 27 -: Bremsbelag
- 28 -: Formstück
- 29 -: Bolzen
- 30 -: Bremssattel
- 31 -: Teller
- 32: Fremdkörperdetektor
- 33: Ringe
- 34: Konsolen
- 35: Kupplung

## Patentansprüche

1. Landwirtschaftliche Erntemaschine als selbstfahrender Mähdrescher, mit an dem vorderen Bereich des Mähdrescherrahmens befestigten, mit einer Antriebswelle versehenen Schrägförderer (5), an dem frontseitig eine Baugruppe (4) zur Aufnahme des Erntegutes angehängt ist, wobei sowohl der Antrieb des Schrägförderers (5) als auch der Antrieb für die Aufnahmebaugruppe (4) von einer über eine Kupplung (35) lösbar mit dem Antriebsmotor (17) verbundenen Riemenscheibe (7, 8) abgeleitet ist,
**dadurch gekennzeichnet,**
**dass** der Antriebswelle (9) für den Schrägförderer (5) eine Bremse (23, 30) in der Weise zugeordnet ist, dass die Antriebswelle (9) für den Schrägförderer (5) einendig in einer mit dem Gehäuse (18) des Schrägförderers (5) fest verbundenen Buchse (20) drehbar gelagert ist und die Buchse (20) einen Bremssattel (30) trägt und wobei die Bremsscheibe (30) der Bremse (23, 30) fest mit der Antriebswelle (9) des Schrägförderers (5) verbunden ist.

2. Landwirtschaftliche Erntemaschine nach Anspruch 1,
**dadurch gekennzeichnet,**
**daß** bei Betätigung der Kupplung (35) für die Riemenscheibe (16) etwa zeitgleich auch die Bremse (23, 30) für den Schrägförderer (5) betätigt wird.

3. Landwirtschaftliche Erntemaschine nach Anspruch 1,
dadurch geken nzeichnet,
daß die Bremse (23, 30) für den Schrägförderer (5) in Abhängigkeit eines Fremdkörperdetektors (32) betätigbar ist.

4. Landwirtschaftliche Erntemaschine nach den Ansprüchen 1 bis 3,
dadurch geken nzeichnet,
daß die Bremse (23, 30) als Scheibenbremse ausgebildet ist.

5. Landwirtschaftliche Erntemaschine nach den Ansprüchen 1 bis 4,
dadurch geken nzeichnet,
daß die Antriebe der Aufnahmebaugruppe 4 über zumindest eine Rutschkupplung (25 bis 27) mit der Antriebsswelle (9) des Schrägförderers (5) verbunden ist.

6. Landwirtschaftliche Erntemaschine nach den Ansprüchen 1 bis 5,
**dadurch gekennzeichnet,**
**daß** auf die Antriebswelle (9) des Schrägförderers (5) eine Riemenscheibe (8) aufgesetzt ist, von der der Antrieb für die Aufnahmebaugruppe (4) abgeleitet ist, und die Riemenscheibe (8) über eine Rutschkupplung (25 bis 27) mit der Schrägfördererantriebswelle (9) in Verbindung steht.

7. Landwirtschaftliche Erntemaschine nach den Ansprüchen 1 bis 6,
**dadurch gekennzeichnet,**
**daß** die Antriebswelle (9) für den Schrägförderer (5) einendig ein einer mit dem Gehäuse (18) des Schrägförderers (5) fest verbundenen Buchse (20) drehbar gelagert ist und letztere einen Bremssattel (30) trägt.

8. Landwirtschaftliche Erntemaschine nach Anspruch 7,
**dadurch gekennzeichnet,**
**daß** die zum Bremssattel (30) zugehörige Bremsscheibe (23) fest mit der Antriebswelle (9) für den Schrägförderer (5) verbunden ist.

9. Landwirtschaftliche Erntemaschine nach den Ansprüchen 7 und 8,
**dadurch gekennzeichnet,**
**daß** der Bremssattel (30) über ein Formstück (28) fest mit der Buchse (20) verbunden ist.

## Claims

1. Agricultural harvesting machine as self-propelled combine harvester with slope conveyor (5), fixed to the front area of the combine harvester frame and provided with a drive shaft, to the front side of which an assembly (4) is attached to receive the crop, both the drive of the slope conveyor (5) and the drive of the receiving assembly (4) being diverted by a pulley (7, 8) releasably connected to the drive motor (17) via a coupling (35),
**characterized in that**
a brake (23, 30) is allocated to the drive shaft (9) for the slope conveyor (5) in such a way that the drive shaft (9) for the slope conveyor (5) is rotatably housed at one end in a bush (20) firmly connected to the housing (18) of the slope conveyor (5) and the bush bears a caliper (30), and wherein the brake disk (30) of the brake (23, 30) is firmly connected to the drive shaft (9) for the slope conveyor (5).

2. Agricultural harvesting machine according to claim 1,
**characterized in that**
upon activation of the coupling (35) for the pulley (16) the brake (23, 30) for the slope conveyor (5) is also activated roughly simultaneously.

3. Agricultural harvesting machine according to claim 1,
**characterized in that**
the brake (23, 30) for the slope conveyor (5) can be activated in dependence on a foreign-body detector (32).

4. Agricultural harvesting machine according to claims 1 to 3,
**characterized in that**
the brake (23, 30) is designed as a disk brake.

5. Agricultural harvesting machine according to claims I to 4,
**characterized in that**
the drives of the receiving assembly 4 are connected to the drive shaft (9) of the slope conveyor (5) via at least one slip clutch (25 to 27).

6. Agricultural harvesting machine according to claims I to 5,
**characterized in that**
fitted onto the drive shaft (9) of the slope conveyor (5) is a pulley (8) by which the drive for the receiving assembly (4) is diverted, and the pulley (8) is connected to the slope conveyor drive shaft (9) via a slip clutch (25 to 27).

7. Agricultural harvesting machine according to claims 1 to 6,
**characterized in that**
the drive shaft (9) for the slope conveyor (5) is rotatably housed at one end in a bush (20) firmly connected to the housing (18) of the slope conveyor (5) and the bush bears a caliper (30).

8. Agricultural harvesting machine according to claim 7,
**characterized in that**
the brake disk (23) belonging to the caliper (30) is firmly connected to the drive shaft (9) for the slope conveyor (5).

9. Agricultural harvesting machine according to claims 7 and 8,
**characterized in that**
the caliper (30) is firmly connected to the bush (20) via a fitting (28).

## Revendications

1. Machine agricole de récolte se présentant sous la forme d'une moissonneuse-batteuse automotrice, avec un convoyeur incliné (5) muni d'un arbre d'entraînement, qui est fixé à la zone antérieure du châssis de moissonneuse-batteuse, et auquel est suspendu côté frontal un organe (4) pour le ramassage du produit de récolte, l'entraînement du convoyeur incliné (5) ainsi que l'entraînement de l'organe de ramassage (4) étant prélevés sur une poulie à courroie (7, 8) qui est liée de manière séparable au moteur d'entraînement (17) par l'intermédiaire d'un accouplement (35), **caractérisée en ce qu'**un frein (23, 30) est associé à l'arbre d'entraînement (9) pour le convoyeur (5) incliné d'une manière telle que l'arbre d'entraînement (9) pour le convoyeur incliné (5), à une extrémité, est monté tournant dans une douille (20) solidaire du carter (18) du convoyeur incliné (5) et que ladite douille (20) porte un étrier de frein (30), le disque de frein (30) du frein (23, 30) étant solidaire de l'arbre d'entraînement (9) du convoyeur incliné (5).

2. Machine agricole de récolte selon la revendication 1, **caractérisé en ce que** lors de l'actionnement de l'accouplement (35) pour la poulie à courroie (16), le frein (29, 30) pour le convoyeur incliné (5) est actionné simultanément.

3. Machine agricole de récolte selon la revendication 1, **caractérisé en ce que** le frein (29, 30) pour le convoyeur incliné (5) peut être actionné en fonction d'un détecteur de corps étranger (32).

4. Machine agricole de récolte selon les revendications 1 à 3, **caractérisé en ce que** le frein (29, 30) est conformé en frein à disque.

5. Machine agricole de récolte selon les revendications 1 à 4, **caractérisé en ce que** le mécanisme d'entraînement de l'organe de ramassage (4) est lié à l'arbre d'entraînement (9) du convoyeur incliné (5) par l'intermédiaire d'au moins un accouplement à friction (25 à 27).

6. Machine agricole de récolte selon les revendications 1 à 5, **caractérisé en ce que** l'arbre d'entraînement (9) du convoyeur incliné (5) porte une poulie à courroie (8), sur laquelle est prélevée la force d'entraînement pour l'organe de ramassage (4), et la poulie à courroie (8) est liée à l'arbre d'entraînement de convoyeur incliné (9) par l'intermédiaire d'un accouplement à friction (25 à 27).

7. Machine agricole de récolte selon les revendications 1 à 6, **caractérisé en ce que** l'arbre d'entraînement (9) pour le convoyeur incliné (5) est monté tournant à une extrémité dans une douille (20) solidaire du carter (18) du convoyeur incliné (5) et ladite douille porte un étrier de frein (30).

8. Machine agricole de récolte selon la revendication 7, **caractérisé en ce que** le disque de frein (23) associé à l'étrier de frein (30) est solidaire de l'arbre d'entraînement (9) pour le convoyeur incliné (5.

9. Machine agricole de récolte selon les revendications 7 et 8, **caractérisé en ce que** l'étrier de frein (23) est lié fermement à la douille (20) par l'intermédiaire d'une pièce façonnée.
